# EUROPEAN PATENT APPLICATION

(11) **EP 4 640 735 A1**
(43) Date of publication of application: **29.10.2025**
(21) Application number: 23906766.3
(22) Date of filing: 08.12.2023
(51) Int. Cl.: C08G 59/66, B01J 13/18, C08K 3/013, C08L 63/00, C09J 163/00, C09K 3/10

(54) **CURABLE RESIN COMPOSITION AND PROCESSED PRODUCT OF SAME**

(30) Priority: 20.12.2022 JP 2022202917
(71) Applicant: ThreeBond Co., Ltd., Tokyo 192-0398 (JP)
(72) Inventor: NAKAMURA, Fumiya, Hachioji-shi, Tokyo 192-0398 (JP); SOGA, Tetsunori, Hachioji-shi, Tokyo 192-0398 (JP); NIWA, Masayuki, Hachioji-shi, Tokyo 192-0398 (JP); ASAI, Kuniyasu, Hachioji-shi, Tokyo 192-0398 (JP); ONODA, Tomohiro, Hachioji-shi, Tokyo 192-0398 (JP)
(74) Representative: Crow, Martin
(86) International application number: PCT/JP2023/043974
(87) International publication number: WO 2024/135400

(57) **Abstract**

There is provided a curable resin composition containing capsules, which composition can retain the sealability of a screw portion of a screw member even in an endurance test such as a heat cycle test. The curable resin composition contains the following components (A) to (D):
component (A): a capsule filled with a polyfunctional epoxy resin and a monofunctional epoxy resin as an inclusion;
component (B): a capsule filled with a polythiol as an inclusion;
component (C): a compound to promote curing of the inclusion of the component (A) with the inclusion of the component (B); and
component (D): an inorganic filler.

## Description

### TECHNICAL FIELD

The present invention relates to a curable resin composition containing capsules, retaining sealability in an endurance test.

### BACKGROUND ART

There are known processed parts obtained by coating and drying curable resin compositions containing capsules on screw portions of screw members such as screws, bolts and nuts. The processed parts are sometimes required to function to prevent loosening of screw members and prevent leaking from screw portions. In Japanese Patent Laid-Open No. H05-186751 and Japanese Patent Laid-Open No. H05-186760, leakage prevention is attempted by adding a swelling resin. However, without some extent of penetration of moisture or oil into gaps in the screw portion, the condition for swelling is not met, and the swelling resin does not swell and sometimes cannot retain sealability.

### SUMMARY OF INVENTION

Conventionally, in curable resin compositions containing capsules, when an endurance test such as a heat cycle test is performed, it is difficult for the sealability of the screw portions of the screw members to be retained.

As a result of exhaustive studies in order to achieve the above object, the present inventors have found means related to a curable resin composition containing capsules, which composition can retain sealability in an endurance test, and have completed the present invention.

Then, the gist of the present invention will be described. A first embodiment of the present invention is a curable resin composition containing the following components (A) to (D):
component (A): a capsule filled with a polyfunctional epoxy resin and a monofunctional epoxy resin as an inclusion;
component (B): a capsule filled with a polythiol as an inclusion;
component (C): a compound to promote curing of the inclusion of the component (A) with the inclusion of the component (B); and
component (D): an inorganic filler.

A second embodiment of the present invention is the curable resin composition according to the first embodiment, wherein the mass ratio of the polyfunctional epoxy resin and the monofunctional epoxy resin in the component (A) is from 99 : 1 to 25 : 75.

A third embodiment of the present invention is the curable resin composition according to the first embodiment or the second embodiment, wherein the curable resin composition further contains a (meth)acrylic polymer having tackiness as component (E).

A fourth embodiment of the present invention is the curable resin composition according to the third embodiment, wherein the (meth)acrylic polymer of the component (E) has a styrene skeleton.

A fifth embodiment of the present invention is the curable resin composition according to the third embodiment or the fourth embodiment, wherein the curable resin composition further contains water as component (F).

A sixth embodiment of the present invention is the curable resin composition according to the fifth embodiment, wherein the component (E) is an emulsion in the component (F); the component (A), the component (B) and the component (D) are dispersed in the component (F); and the component (C) is dissolved or dispersed in the component (E) or the component (F).

A seventh embodiment of the present invention is the curable resin composition according to any one of the first to sixth embodiments, wherein a cured substance made by curing a composition of the inclusion of the component (A), the inclusion of the component (B), the component (C) and the component (D) in a 25°C atmosphere for 72 hours has a linear expansion coefficient in the range of 140 to 150°C as measured by thermomechanical analysis (TMA) of 170 to 250 ppm/°C.

An eighth embodiment of the present invention is the curable resin composition according to any one of the first to seventh embodiments, wherein a cured substance made by curing a composition of the inclusion of the component (A), the inclusion of the component (B), the component (C) and the component (D) in a 25°C atmosphere for 72 hours has a glass transition temperature as measured by thermomechanical analysis (TMA) of 50°C or lower.

A ninth embodiment of the present invention is the curable resin composition according to any one of the first to eighth embodiments, wherein the mass ratio of the inclusion of the component (A), the inclusion of the component (B), the component (C) and the component (D) is 100 : 50 to 100 : 5 to 20 : 10 to 30.

A tenth embodiment of the present invention is a screw member having a screw portion coated with a curable resin composition according to any one of the first to ninth embodiments.

### BRIEF DESCRIPTION OF DRAWING

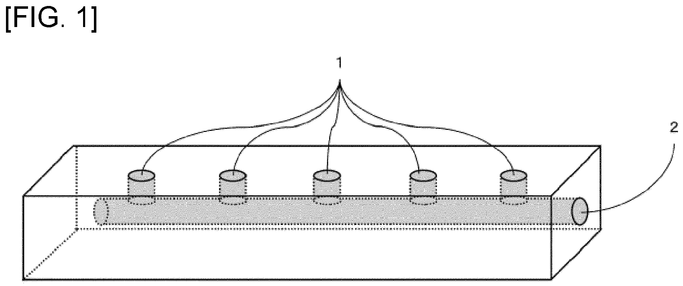

Fig. 1 is one example of a jig for checking airtightness (sealability) to be used in a pressure test.

### DESCRIPTION OF EMBODIMENTS

In the present description, "X to Y" is used in the meaning including numerical values described before and after the to (X and Y) as the lower limit value and the upper limit value, and means "X or more and Y or less".

One aspect of the present invention is a curable resin composition containing the following components (A) to (D):
component (A): a capsule filled with a polyfunctional epoxy resin and a monofunctional epoxy resin as an inclusion;
component (B): a capsule filled with a polythiol as an inclusion;
component (C): a compound to promote curing of the inclusion of the component (A) with the inclusion of the component (B); and
component (D): an inorganic filler.

The present invention enables the provision of the curable resin composition containing capsules, which composition retains sealability in a screw portion of a screw member in an endurance test such as a heat cycle test.

Hereinafter, the curable resin composition according to the present invention will be described in detail.

The component (A) which can be used in the present invention is a capsule, and is the capsule filled with a polyfunctional epoxy resin and a monofunctional epoxy resin as an inclusion.

The polyfunctional epoxy resin refers to an epoxy resin (liquid) having two or more epoxy groups in its molecule. Specific examples of the epoxy resin having two or more epoxy groups in its molecule, that is, a bifunctional epoxy resin, include bisphenol type epoxy resins such as bisphenol A type epoxy resins and hydrogenated products thereof, bisphenol F type epoxy resins and hydrogenated products thereof, bisphenol S type epoxy resins, tetrabromobisphenol A type epoxy resins, and bisphenol AD type epoxy resins. The bisphenol type epoxy resins may be used singly in one kind, or as a mixture of two or more kinds. In the curable resin composition according to the present invention, it is preferable to use, as the bisphenol type epoxy resins, at least one type of bisphenol A type epoxy resins and bisphenol F type epoxy resins. In addition, the epoxy equivalent (g/eq) of the bisphenol type epoxy resins is preferably 120 to 300.

Specific examples of the bisphenol A type epoxy resins include jER (registered trademark) series, manufactured by Mitsubishi Chemical Corp., 827, 828, 1001, 1002, 1003, 1003F, 1004, 1004FS, 1004F, 1004AF, 1055, 1005F, 1006FS, 1007, 1007FS, 1008, 1009 and the like, Epototo series, manufactured by Tohto Kasei Co. Ltd., YD-011, YD-012, YD-013, YD-014, YD-017, YD-019, YD-020N, YD-020H and the like, Epiclon series, manufactured by DIC Corp., 1050, 3050, 4050, 7050 and the like, and products manufactured by Adeka Corp., EP-5100, EP-5400, EP-5700, EP-5900 and the like, but are not limited thereto. Specific examples of the bisphenol F type epoxy resins include jER (registered trademark) series, manufactured by Mitsubishi Chemical Corp., 806, 807, 4005P, 4007P, 4010P and the like, but are not limited thereto.

Epoxy resins having three or more epoxy groups in their molecules are not especially limited, but include novolac type epoxy resins, such as phenol novolac type epoxy resins and o-cresol novolac type epoxy resins; glycidyl ether-based epoxy resins such as triglycidyl ether of tris(p-hydroxyphenyl)methane and derivatives thereof, tetraglycidyl ether of tetrakis(p-hydroxyphenyl)ethane and derivatives thereof, triglycidyl ether of glycerol, and tetraglycidylether of pentaerythritol; and glycidylamine-based epoxy resins such as tetraglycidyldiaminodiphenylmethane, tetraglycidyl-m-xylylenediamine and triglycidyl-m-aminophenol. Commercially available products of the phenol novolac type epoxy resins include iER (registered trademark) series, manufactured by Mitsubishi Chemical Corp., 152, 154 and the like, Epiclon series, manufactured by DIC Corp., N-740, N-770, N-775 and the like, PY307, EPN1179, EPN1180 and the like manufactured by Huntsman Advanced Material, and YDPN638, YDPN638P and the like manufactured by Tohto Kasei Co. Ltd., but are not limited thereto. The epoxy equivalent of the epoxy resins having three or more epoxy groups in their molecules is preferably 50 to 150 g/eq.

The monofunctional epoxy resins are preferably compounds having one epoxy group in one molecule thereof, and examples thereof include monoglycidyl ether compounds and monoglycidyl ester compounds. Examples of the monoglycidyl ether compounds include methyl glycidyl ether, butyl glycidyl ether, 2-ethylhexyl glycidyl ether, sec-butylphenyl glycidyl ether, 2-methyloctyl glycidyl ether, octadecyl glycidyl ether, phenyl glycidyl ether, tolyl glycidyl ether and octylphenyl glycidyl ether. Examples of the monoglycidyl ester compounds include glycidyl ester compounds of monovalent carboxylic acids, such as acrylic acid, methacrylic acid, acetic acid, 2-ethylhexyl acid and neodecanoic acid. In the present invention, use of glycidyl esters is preferable, and use of glycidyl esters having a skeleton having 8 or more carbon atoms is more preferable. These may be used singly in one kind, or as a mixture of two or more kinds. The epoxy equivalent of the compounds having one epoxy group in one molecule thereof is preferably 150 to 450 g/eq, and more preferably 170 to 350 g/eq.

Specific examples of the monofunctional epoxy resins include Epodil (registered trademark) 759 (manufactured by Air Products and Chemicals, Inc., an alkyl(C12-C13) glycidyl ether, epoxy equivalent: 275 to 290 g/eq), Cardolite (registered trademark) Lite2513HP (manufactured by Cardolite Corp., an alkyl(C15)phenol glycidyl ether, epoxy equivalent: 375 to 450 g/eq), GE-10 (manufactured by CVC Thermoset Specialties, Inc., o-cresyl glycidyl ether, epoxy equivalent: 170 to 195 g/eq), and CARDURA E10P (manufactured by Momentive Performance Materials, neodecanoic acid glycidyl ester, epoxy equivalent: 240 g/eq), but are not limited thereto. In addition, these may be used singly in one kind, or as a mixture of two or more kinds.

In order to make mixing with other components good, the viscosity (25°C) of the inclusion of the component (A) is preferably 1.0 to 500 mPa·s, more preferably 1.0 to 400 mPa·s and still more preferably 1.0 to 350 mPa·s. In the inclusion of the component (A), the mass ratio of the polyfunctional epoxy resin and the monofunctional epoxy resin (polyfunctional epoxy resin : monofunctional epoxy resin) is preferably in the range of 99 : 1 to 25 : 75, more preferably in the range of 95 : 5 to 50 : 50 and most preferably in the range of 90 : 10 to 70 : 30.

In the present invention, the component (A) and the component (B) described later are capsules, and the capsules contain an inclusion. Thereby, direct contact with other components can be avoided and the storage stability of the capsule type curable resin composition can be secured. Capsules in Examples described later are capsulated by appropriately using methods suitable to corresponding raw materials.

With regard to production methods of the capsules filled with the inclusions, the capsules can be produced by using well-known methods, for example, an interfacial polymerization method, an in-situ method, an insolubilized precipitation method or a coacervation method. The capsules can be produced, for example, by using a method described in Japanese Patent Laid-Open No. 2000-15087 or the like.

In the present specification, a wall to prevent the inclusion from leaking from the capsule is called a capsule wall. As a substance constituting the capsule wall (wall material), a conventionally well-known one can be used. As the substance constituting the capsule wall (wall material), for example, a gelatin, an aldehyde resin or a urea resin is used, and the substance (wall material) more specifically includes urea-formaldehyde resins (for example, glyoxal resins), melamine-formaldehyde resins, polyurea resins, polyurethane reins, and isobutylene-maleic anhydride copolymers, but is not limited thereto. The substance constituting the capsule wall (wall material) is preferably a urea-formaldehyde resin (for example, glyoxal resin) and/or an isobutylene-maleic anhydride copolymer. The average particle size of the capsules can be made to be a desired value by regulating the stirring speed, the stirring time and the like. In the curable resin composition according to the present invention, the average particle size of the capsules is preferably 30 to 400 µm and more preferably 30 to 200 µm. Due to that the average particle size of the capsules is in the above range, the amount of tailings generated in screwing a processed bolt in a base material can be suppressed and a high fixing force can be attained. Here, the average particle size of the capsules is determined as follows. That is, a photograph of capsules sampled arbitrarily is taken by using a scanning electron microscope and particle sizes are measured. The average size value of 100 capsules is taken as the average particle size.

In one capsule, the mass ratio of the inclusion and the capsule wall (inclusion : capsule wall) is preferably from 60 : 40 to 90 : 10. Due to that the mass ratio is in the above range, such effects are attained that the capsule wall comes to have a suitable thickness and the capsule itself is stabilized; and in screwing, the capsule is fully broken.

The component (B) which can be used in the present invention is a capsule, and the inclusion of the capsule of the component (B) is a polythiol. The polythiol suffices if being a compound having two or more thiol groups in one molecule thereof; and a compound having three thiol groups in one molecule thereof is preferable, and a compound having four thiol groups in one molecule thereof is more preferable. In addition, the polythiol may be used in one kind, or may be used concurrently in two or more kinds. Specific examples of the polythiol include aliphatic polythiol compounds, aromatic polythiol compounds and polythiol compounds having a sulfide bond(s), but are not limited thereto.

The aliphatic polythiol compounds having two thiol groups include 1,2-ethanedithiol, 1,2-propanedithiol, 1,3-propanedithiol, 1,4-butanedithiol, 1,6-hexanedithiol, 1,7-heptanedithiol, 1,8-octanedithiol, 1,9-nonanedithiol, 1,10-decanedithiol, 1,12-dodecanedithiol, 2,2-dimethyl-1,3-propanedithiol, 3-methyl-1,5-pentanedithiol, 2-methyl-1,8-octanedithiol, 1,4-cyclohexanedithiol, 1,4-bis(mercaptomethyl)cyclohexane, 1,1-cyclohexanedithiol, 1,2-cyclohexanedithiol, bicyclo[2.2.1]hepta-exo-cis-2,3-dithiol, 1,1-bis(mercaptomethyl)cyclohexane, bis(2-mercaptoethyl) ether, ethylene glycol bis(2-mercaptoacetate) and ethylene glycol bis(3-mercaptopropionate), but are not limited thereto.

The aliphatic polythiol compounds having three thiol groups include 1,1,1-tris(mercaptomethyl)ethane, 2-ethyl-2-mercaptomethyl-1,3-propanedithiol, 1,2,3-propanetrithiol, trimethylolpropane tris(2-mercaptoacetate), trimethylolpropane tris(3-mercaptopropionate) and tris[(mercaptopropionyloxy)-ethyl] isocyanurate, but are not limited thereto.

The aliphatic polythiol compounds having four or more thiol groups include pentaerythritol tetrakis(2-mercaptoacetate), pentaerythritol tetrakis(3-mercaptopropionate), pentaerythritol tetrakis(3-mercaptobutyrate) and dipentaerythritol hexa-3-mercaptopropionate, but are not limited thereto. The aliphatic polythiol compound having four or more thiol groups is preferably pentaerythritol tetrakis(3-mercaptopropionate).

The aromatic polythiol compounds include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(2-mercaptoethyl)benzene, 1,3-bis(2-mercaptoethyl)benzene, 1,4-bis(2-mercaptoethyl)benzene, 1,2-bis(2-mercaptoethyleneoxy)benzene, 1,3-bis(2-mercaptoethyleneoxy)benzene, 1,4-bis(2-mercaptoethyleneoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(2-mercaptoethyl)benzene, 1,2,4-tris(2-mercaptoethyl)benzene, 1,3,5-tris(2-mercaptoethyl)benzene, 1,2,3-tris(2-mercaptoethyleneoxy)benzene, 1,2,4-tris(2-mercaptoethyleneoxy)benzene, 1,3,5-tris(2-mercaptoethyleneoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(2-mercaptoethyl)benzene, 1,2,3,5-tetrakis(2-mercaptoethyl)benzene, 1,2,4,5-tetrakis(2-mercaptoethyl)benzene, 1,2,3,4-tetrakis(2-mercaptoethyleneoxy)benzene, 1,2,3,5-tetrakis(2-mercaptoethyleneoxy)benzene, 1,2,4,5-tetrakis(2-mercaptoethyleneoxy)benzene, 2,2'-mercaptobiphenyl, 4,4'-thiobis-benzenethiol, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-bis(2-mercaptoethylthio)benzene, 1,4-bis(2-mercaptoethylthio)benzene, 1,2-bis(2-mercaptoethylthiomethyl)benzene, 1,3-bis(2-mercaptoethylthiomethyl)benzene, 1,4-bis(2-mercaptoethylthiomethyl)benzene, 1,2,3-tris(2-mercaptoethylthio)benzene, 1,2,4-tris(2-mercaptoethylthio)benzene, 1,3,5-tris(2-mercaptoethylthio)benzene, 1,2,3,4-tetrakis(2-mercaptoethylthio)benzene, 1,2,3,5-tetrakis(2-mercaptoethylthio)benzene and 1,2,4,5-tetrakis(2-mercaptoethylthio)benzene, but are not limited thereto.

The polythiol compounds having a sulfide bond(s) include bis(2-mercaptoethyl) sulfide, bis(2-mercaptoethylthio)methane, 1,2-bis(2-mercaptoethylthio)ethane, 1,3-bis(2-mercaptoethylthio)propane, 1,2,3-tris(2-mercaptoethylthio)propane, tetrakis(2-mercaptoethylthiomethyl)methane, 1,2-bis(2-mercaptoethylthio)propanethiol, 2,5-dimercapto-1,4-dithian, bis(2-mercaptoethyl) disulfide, 3,4-thiophenedithiol, 1,2-bis(2-mercaptoethyl)thio-3-mercaptopropane and bis-(2-mercaptoethylthio-3-mercaptopropane) sulfide, but are not limited thereto.

Specific examples of polythiols having secondary thiol groups include pentaerythritol tetrakis(3-mercaptobutyrate), 1,4-bis(3-mercaptobutyryloxy)butane, 1,3,5-tris(3-mercaptobutyryloxyethyl)-1,3,5-triazine-2,4,6(1H,3H,5H)-trione, trimethylolpropane tris(3-mercaptobutyrate), trimethylolethane tris(3-mercaptobutyrate), trimethylolpropane tris(3-mercaptobutyrate) and trimethylolethane tris(3-mercaptobutyrate), but are not limited thereto. Commercially available products thereof include PEMP and the like manufactured by SC Organic Chemical Co. Ltd., and PE1, BD1, NR1 and the like of Karenz MT (registered trademark) series manufactured by Showa Denko K.K., but are not limited thereto.

In order to make the linear expansion coefficient in the temperature range of 140 to 150°C as measured by thermomechanical analysis (TMA) of a cured substance made by curing, in a 25°C atmosphere for 72 hours, a composition of the inclusion of the component (A), the inclusion of the component (B), the component (C) described later and the component (D) described later, to be in a specific range (170 to 250 ppm/°C), the content of the inclusion of the component (B) is, with respect to 100 parts by mass of the inclusion of the component (A), preferably 50 to 100 parts by mass.

The component (C) which can be used in the present invention is a compound to promote curing of the inclusion of the component (A) with the inclusion of the component (B). As the component (C), an amine compound or the like is used and is preferably liquid in a 25°C atmosphere. Examples of the amine compound include imidazole, 1,3-bis-4-pyperidylpropane, tris(dimethylaminomethyl)phenol tri(2-ethylhexoate), 1,6-hexanediamine, 2,4,6-tris(dimethylaminomethyl)phenol, methylenedianiline, substituted alkylenediamines, nonvolatile amines such as a liquid polyamide of a dimerized unsaturated fatty acid reacted with an alkylenediamine (Versamamid (registered trademark) 125), nonvolatile solid amine salts of volatile liquid amines reacted with acids, amine adducts and water-insoluble polyamide resins, but are not limited thereto. The amine compound may be used singly in one kind or in a combination of two or more kinds.

The component (C) can be more enhanced in the storage stability by being made not to be contained in the inclusion of the component (A) and the inclusion of the component (B), and it is preferable that the component (C) is present outside the component (A) and the component (B) in the composition. In order to improve the curability, the content of the component (C) (in the case of using two or more kinds of component (C), the total amount thereof) is, with respect to 100 parts by mass of the total of the inclusion of the component (A) and the inclusion of the component (B), preferably 1 to 15 parts by mass. Alternatively, the content of the component (C) is, with respect to 100 parts by mass of the inclusion of the component (A), preferably 5 to 20 parts by mass.

The component (D) which can be used in the present invention is an inorganic filler. The inorganic filler includes silica powder, fumed silica powder, talc powder, calcium carbonate powder, diatomaceous earth, mica powder, mica powder and glass powder. The component (D) may be used singly in one kind, or may be used as a mixture of two or more kinds. From the viewpoint of improving the adhesive strength, the component (D) is preferably a mixture of diatomaceous earth and mica powder. The shape of the inorganic filler includes spherical, platy, acicular, flaky and indeterminate shapes. The average particle size of the component (D) can be measured by a laser diffraction/scattering method or the like. The 50% average particle size of the component (D) is a particle size at a cumulative value of 50% in a particle size distribution determined by the laser diffraction/scattering method. The 50% average particle size of the component (D) is, for example, 0.1 to 150 µm. It is preferable that each raw material constituting the component (D) has a 50% average particle size in the range of 0.1 to 150 µm. In particular, the component (D) is more preferably a combination of a raw material having a 50% average particle size of 10 µm or smaller with a raw material having a 50% average particle size of 100 µm or larger.

From the viewpoint of making the cured substance to develop the toughness, the content of the component (D) (in the case of using two or more kinds of component (D), the total amount thereof) is, with respect to 100 parts by mass of the total of the inclusion of the component (A) and the inclusion of the component (B), preferably 1 to 15 parts by mass; and alternatively, the content of the component (D) is, with respect to 100 parts by mass of the inclusion of the component (A), preferably 10 to 30 parts by mass.

From the viewpoint of improving the airtightness (sealability) of a processed bolt, the mass ratio of the inclusion of the component (A), the inclusion of the component (B), the component (C) and the component (D) (the inclusion of the component (A) : the inclusion of the component (B) : the component (C) : the component (D)) is preferably 100 : 50 to 100 : 5 to 20 : 10 to 30.

The component (E) which can be used in the present invention is a (meth)acrylic polymer having tackiness in a 25°C atmosphere. It is preferable to use the component (E) as an aqueous solution being an emulsion of the component (E). An emulsion refers to a form in which polymer particles fabricated by putting in a polymerizable monomer, a surfactant and a polymerization initiator and emulsion polymerizing the polymerizable monomer are dispersed stably in water. An emulsion produced in water is specially called an aqueous emulsion. In the curable resin composition according to the present invention, it is preferable that the component (E) is present as a dispersoid of the emulsion. Specific examples of the component (E) include polymers of a plurality of kinds of (meth)acrylic monomers, and copolymers of a styrene monomer with a (meth)acrylic monomer, but are not limited thereto. The aqueous emulsion has such an effect that in a drying step, the component (E) gathers and fuses concurrently with evaporation of water and causes capsules to be tackily adhered (fixed) to a screw member or the like. Taking the capability of fixing the capsules, it is preferable that the (meth)acrylic polymer has a styrene skeleton derived from a styrene monomer. The component (E) may be used singly in one kind, or may be used as mixture of two or more kinds.

In the present specification, the term of "(meth)acrylic" means acrylic and/or methacrylic.

Specific examples of the component (E) include ACRONAL YS-800ap, YS-756ap, YJ-2716Dap, YJ-2718Dap, YJ-2720Dap, and JONCRYL PDX-7430, PDX-7164, 8380 and 8383, manufactured by BASF AG, and Polysol (registered trademark) AP-3160A, manufactured by Showa Denko K.K, but are not limited thereto. These may be used singly in one kind, or may be used as a mixture of two or more kinds.

In an embodiment of the present invention, in the case of adding the component (E) as an aqueous emulsion (dispersoid of the aqueous emulsion) to the curable composition, the solid content concentration of the component (E) is preferably 20 to 70% by mass, more preferably 25 to 65% by mass and still more preferably 30 to 60% by mass.

The content of the component (E) is, with respect to 100 parts by mass of the total of the components (A) to (D) in the curable resin composition, preferably 1 to 20 parts by mass and more preferably 5 to 15 parts by mass. With the content of the component (E) being 1 part by mass or higher, the capsules can be fully tackily adhered; and with the content being 20 parts by mass or lower, the generation of tailings when the curable resin composition is coated to a screw member and the screw member is tightened can be suppressed.

The component (F) which can be used in the present invention is water. The component (F) can be used as a medium (disperse medium of the emulsion) for dispersing the component (E) as the emulsion (dispersoid of the emulsion). The component (F) includes alkali electrolytic water and ion-exchange water, but are not limited thereto.

The content of the component (F) is, with respect to the whole (100% by mass) of the curable resin composition, preferably 10 to 70% by mass and more preferably 20 to 60% by mass. By adding water to the curable resin composition containing the above components (A) to (D), and as required, the component (E), each component can also be made to be in a suitable concentration. In the case where raw materials containing other components contain water, the water derived from the raw materials is treated as the component (F).

In consideration of the storage stability, in the case where the curable resin composition contains the components (A) to (F), the curable resin composition is preferably in such a state that the component (E) is an emulsion in the component (F) (disperse medium) (the component (E) is present as a dispersoid); the component (A), the component (B) and the component (D) are dispersed in the component (F); and the component (C) is dissolved or dispersed in the component (E) or the component (F).

To the curable resin composition according to the present invention, in addition to the above each component, as required, various kinds of additives can be added in the range of not impairing the effect of the present invention. The additives include organic fillers (axial tension regulators, provided excluding the component (E)), rust preventives (provided excluding the component (C)), defoaming agents, pigments (provided excluding the component (D)), dispersants, surfactants, rheology regulators and thickeners.

The organic fillers (axial tension regulators, provided excluding the component (E)) include polyethylene powder, polypropylene powder, polytetrafluoroethylene powder and nylon powder, but are not limited thereto. The organic filler has such an effect that when a screw member is tightened, the axial tension is regulated, so-called, an effect of preventing galling of a screw portion.

Examples of the rust preventives (provided excluding the component (C)) suitably include sodium benzoate, benzotriazole, chromate salts (for example, zinc chromate, calcium chromate, strontium chromate, barium chromate, zinc potassium chromate and tetrabasic zinc chromate), phosphate salts (for example, zinc phosphate, zinc phosphosilicate, aluminum zinc phosphate, calcium zinc phosphate, calcium phosphate, aluminum pyrophosphate, calcium pyrophosphate, aluminum dihydrogen tripolyphosphate, aluminum metaphosphate, calcium metaphosphate, zinc phosphomolybdate and aluminum phosphomolybdate), nitrite salts (for example, sodium nitrite, calcium nitrite, strontium nitrite, barium nitrite and ammonium nitrite), phytate salts (for example, zinc phytate, sodium phytate, potassium phytate and calcium phytate), tannate salts (for example, sodium tannate and potassium tannate), and polyamine compounds (for example, N-(2-hydroxyethyl)ethylenediaminetriacetic acid (HEDTA), ethylenediaminetetraacetic acid (EDTA), diethylenetriaminepentaacetic acid (DTPA), propylenediaminetetraacetic acid (PDTA), iminodiacetic acid, nitrylotriacetic acid (NTA), diethylenetriamine pentamethylene phosphonate (DTPMP), and alkali metal salts thereof); intercalation compounds of layered phosphate salts such as aluminum dihydrogen tripolyphosphate intercalated with a monoalkylamine, a polyamine or a quaternary ammonium ion; and MIO, lead cyanamide, ammonium metavanadate, ammonium zircofluoride, zinc molybdate, aluminum molybdate, barium metaborate and organic nitro compound zinc salts. Specific examples of the rust preventives include Ascotran series, manufactured by Ascotec Holding GmbH, and Kileslite series, manufactured by Chelest Corp., but are not limited thereto.

Examples of the defoaming agents suitably include silicone defoaming agents (silicone-based surfactants), modified silicone-based defoaming agents, acetylene alcohol-based surfactants, silica-based defoaming agents, wax, polyether-modified polydimethylsiloxane, paraffin-based oil, and foam breaking aliphatic derivatives.

The pigments (provided excluding the component (D)) include organic pigments and inorganic pigments. The organic pigments include isoindolinone, isoindoline, azomethine, perylene, anthraquinone, dioxazine and phthalocyanine; and the inorganic pigments include carbon black, Ultramarine Blue, Prussian Blue and lithopone. These pigments may be ones which have been surface treated and have self-dispersibility to aqueous media.

One embodiment of the present invention is a screw member whose screw portion has been coated with the curable resin composition according to the present invention. The curable resin composition according to the present invention can be used by being coated (precoated) and dried on screw portions of screw members such as screws and bolts, whereby processed articles are provided. Moreover, examples of the screw members include, in addition to screws and bolts, screw joints such as nipples, sockets, taper plugs and elbows, and nut inner circumferences with the screw portion, but are not limited thereto. The materials of the screw members include iron, aluminum, gold, stainless steel and SUS, and may be these having been subjected to plating treatment such as galvanized chromate treatment, or these coated with rust preventives.

In order to dry the curable resin composition, it is preferable that the curable resin composition is dried in a 25 to 120°C atmosphere in a hot air drying oven or the like. Due to carrying out the drying at a temperature of 25°C or higher, the volatilization is slow and the generation of rust on screw members can be suppressed; and due to carrying out the drying at a temperature of 120°C or lower, coated films are made to be uniform. In addition, the drying time is preferably 5 min to 1 hour and more preferably 5 min to 30 min.

### Examples

Then, the present invention will be described in more detail by way of Examples, but the present invention is not any more limited only to these Examples.

### [Raw materials for preparing capsules]

The following inclusions were prepared in order to prepare capsules, and the capsules were prepared by the following method. The capsule name of each capsule, the proportion (% by mass) of inclusion, and the component(s) of inclusion and the proportion (% by mass) thereof are collectively shown in Table 1.

### Polyfunctional epoxy resins

· Bisphenol F type epoxy resin (jER (registered trademark) 806, manufactured by Mitsubishi Chemical Corp.)
· Tetrafunctional glycidylamine type epoxy (jER (registered trademark) 604, manufactured by Mitsubishi Chemical Corp.)

### Monofunctional epoxy resin

· Neodecanoic acid glycidyl ester (CARDURA E10P, manufactured by Momentive Performance Materials) Polythiol
· Pentaerythritol tetrakis-3-mercaptopropionate (jER (registered trademark) Cure QX40, manufactured by Mitsubishi Chemical Corp.)

### Acrylate resins

· Ethylene glycol dimethacrylate (NK Ester 1G, manufactured by Shin-Nakamura Chemical Co. Ltd.) · Epoxy group-containing acrylic polymer (Marproof G-0150M, manufactured by NOF Corp.)
· Ethoxylated bisphenol A dimethacrylate (NK Ester BPE-80N, manufactured by Shin-Nakamura Chemical Co. Ltd.)
· 1,6-Hexanediol dimethacrylate (Light-Ester 1.6HX, manufactured by Kyoueisha Chemical Co. Ltd.)

### Organic peroxide

· Benzoyl peroxide (Nyper BW, manufactured by NOF Corp.)

### [Preparation of Capsule A, Capsule A'2 and Capsule A'3]

13.9 g of an isobutylene-maleic anhydride copolymer (weight-average molecular weight: 165,000) of 100% by mass in solid content was added to 94.5 g of ion-exchange water, and heated to 40°C under stirring. Further, a 10 mass% tartaric acid aqueous solution was dropwise charged to regulate the pH in the range of 3.0 to 4.0, and thereafter, 140 g of an inclusion indicated in Table 1 was added, and stirred under checking the particle size. Further, 183 g of ion-exchange water was added, and heated to 60°C under stirring. Then, 57.1 g of a 14.6 mass% aqueous solution of a glyoxal resin as a wall material was added, and subjected to polycondensation for 1 hour under stirring. Thereafter, the resultant was further heated to 90°C, and subjected to the polycondensation reaction for 2 hours under stirring, and cooled to room temperature; then, a 28 mass% ammonia aqueous solution was added to neutralize the resultant solution to finish the reaction to thereby obtain a slurry of capsules. The slurry was dehydrated by a centrifugal dehydrator and thereafter dried, to thereby obtain Capsule A, Capsule A'2 and Capsule A'3. The average particle size of the Capsules was 150 µm.

### [Preparation of Capsule A'1]

15.6 g of an isobutylene-maleic anhydride copolymer (weight-average molecular weight: 165,000) of 100% by mass in solid content was added to 42.4 g of ion-exchange water, and heated to 40°C under stirring. Further, a 10 mass% tartaric acid aqueous solution was dropwise charged to regulate the pH at 3.5, and thereafter, 140 g of an inclusion indicated in Table 1 was added, and stirred under checking the particle size. Then, 268 g of ion-exchange water and 66.6 g of a 14.6 mass% aqueous solution of a glyoxal resin as a wall material were added, and the resultant was heated to 60°C and subjected to polycondensation for 1 hour under stirring. Thereafter, the resultant was further heated to 90°C, and subjected to the polycondensation reaction for 2 hours under stirring, and cooled to room temperature; then, a 28 mass% ammonia aqueous solution was added to neutralize the resultant solution to finish the reaction to thereby obtain a slurry of capsules. The slurry was dehydrated by a centrifugal dehydrator and thereafter dried to thereby obtain Capsule A'1. The average particle size of the Capsule was 50 µm.

### [Preparation of Capsule B]

11.5 g of an isobutylene-maleic anhydride copolymer (weight-average molecular weight: 165,000) of 100% by mass in solid content was added to 27.3 g of ion-exchange water, and heated to 40°C under stirring in the container, and a 10 mass% tartaric acid aqueous solution was dropwise charged thereto to regulate the pH at 3.5, and thereafter, 90 g of an inclusion indicated in Table 1 was added and stirred. Further, 172 g of ion-exchange water was added and stirred under checking the particle size. Thereafter, 42.4 g of a 14.6 mass% aqueous solution of a glyoxal resin was added, and the resultant was heated to 60°C and subjected to polycondensation for 1 hour under stirring. Further, the resultant was further heated to 90°C, and subjected to the polycondensation reaction for 2 hours under stirring. The resultant was cooled to room temperature; thereafter, a 28 mass% ammonia aqueous solution was added to neutralize the resultant solution to finish the reaction to thereby obtain a slurry of capsules. Next, the slurry was dehydrated by a centrifugal dehydrator to thereby obtain Capsule B. The average particle size of the Capsule was 55 µm.

### [Preparation of Capsule B']

6,000 g of a polyvinyl alcohol of 100% by mass in solid content and 50% or higher in saponification value was added to 8,500 g of ion-exchange water, and 7,500 g of an inclusion indicated in Table 1 was added, and thereafter stirred under checking the particle size. 1,762.5 g of an aqueous solution of a mixture, whose concentration was regulated at 15% by mass, of urea and resorcin in a mass ratio of 1 : 2 in advance, and 630 g of 35 mass% formalin aqueous solution were successively added, and stirred and mixed. Finally, the resultant was neutralized with a 20 mass% dilute sulfuric acid. 600 g of a polyvinyl alcohol of 50% or higher in saponification value was again added and stirred. Then, 2,756.25 g of an aqueous solution of a mixture, whose concentration was regulated at 18% by mass, of urea and resorcin in a mass ratio of 2 : 7 in advance, and 1,260 g of a 35 mass% formalin aqueous solution were added, and stirred and mixed to thereby obtain a slurry of capsules. The slurry was dehydrated by a centrifugal dehydrator to thereby obtain Capsule B'. The average particle size of the Capsule was 30 µm.

**[Table 1]**

| Capsule | | Inclusion | |
|---|---|---|---|
| Capsule Name | Proportion of Inclusion | Component | Proportion |
| Capsule A | 85 | jER806 | 75 |
| | | E10P | 25 |
| Capsule A'1 | 85 | jER806 | 25 |
| | | jER604 | 75 |
| Capsule B | 85 | QX40 | 100 |
| Capsule A'2 | 85 | 1G | 19 |
| | | G-0150M | 3 |
| | | BPE-80N | 78 |
| Capsule A'3 | 85 | BPE-80N | 50 |
| | | 1.6HX | 50 |
| Capsule B' | 85 | BW | 100 |

In order to prepare curable resin compositions of Examples 1 and 2 and Comparative Examples 1 to 3, the following components were prepared. Hereinafter, the curable resin compositions of the Examples and Comparative Examples are also called simply compositions.
component (A): a capsule filled with a polyfunctional epoxy resin and a monofunctional epoxy resin as an inclusion
· Capsule A
   components (A'): capsules other than the component (A)
· Capsule A'1
· Capsule A'2
· Capsule A'3
   component (B): a capsule filled with a polythiol as an inclusion
· Capsule B
   component (B'): a capsule other than the component (B)
· Capsule B'
   component (C): compounds to promote curing the inclusion of the component (A) with the inclusion of the component (B)
· 2,4,6-tris(dimethylaminomethyl)phenol (Ankamine (registered trademark) K54, manufactured by Air Product Japan, Inc.)
· tris(dimethylaminomethyl)phenol tri(2-ethylhexoate) (Ankamine (registered trademark) K61-B, manufactured by Air Product Japan, Inc.)
· an n-propyl alcohol (NPA) solution of 50% by mass in solid content of p-tolyldiethanolamine (reagent) component (D): fillers
· a silica (dried diatomaceous earth) (50% average particle size: 3 µm) (Celite Snow Floss, manufactured by Emerys Minerals Ltd.)
· flaky mica powder (50% average particle size: 130 µm) (SB-061R, manufactured by Yamaguchi Mica Co. Ltd.)
   component (E): (meth)acrylic polymers having tackiness
· a non-self-crosslinking (meth)acrylic copolymer aqueous emulsion (solid content: 45% by mass) (Newcoat KSB-1, manufactured by Shin-Nakamura Chemical Co. Ltd.)
· a non-self-crosslinking (meth)acrylic-styrene copolymer aqueous emulsion (solid content: 44% by mass) (Polysol (registered trademark) AP-3160A, manufactured by Showa Denko K.K.)
   component (F): water
· ion-exchange water

### Organic filler (axial tension regulator)

· a chemically crushed polyethylene micropowder (Flo-Thene UF20S, manufactured by Sumitomo Seika Chemicals Co. Ltd.)

### Rust preventives

· a sodium nitrite-free rust preventive (Ascotran AL4, manufactured by Ascotec Holding GmbH)
· a water-soluble rust preventive for iron (Kileslite W-16B, manufactured by Chelest Corp.).

In order to prepare each of the compositions, the component (C) to the component (F) were weighed and put in a beaker and stirred at room temperature for 30 min. Thereafter, the component (A) (or the (A') component) and the component (B) (or the (B') component) were added and further stirred at room temperature for 30 min. Detailed preparation amounts were according to Table 2. Every numerical value in Table 2 is in parts by mass.

**[Table 2]**

| Component | Raw Material Name | Example 1 | Example 2 | Comparative Example 1 | Comparative Example 2 | Comparative Example 3 |
|---|---|---|---|---|---|---|
| (A) component | Capsule A | 12 | 12 | | | |
| (A') component | Capsule A'1 | | | 12 | | |
| | Capsule A'2 | | | | 60 | |
| | Capsule A'3 | | | | | 60 |
| (B) component | Capsule B | 10 | 12 | 12 | | |
| (B') component | Capsule B' | | | | 3.5 | 3.5 |
| (C) component | K-54 | 0.6 | 0.7 | 0.7 | | |
| | K-61B | 0.7 | 0.9 | 0.9 | | |
| | p-tolyldiethanolamine | | | | 0.2 | 0.2 |
| Solvent | NPA | | | | 0.2 | 0.2 |
| (D) component | SNOW FLOSS | 1.7 | 2.0 | 2.0 | 6.0 | 6.0 |
| | SB-061R | | | | 7.7 | 7.7 |
| (E) component | KSB-1 (solid content) | | | 3.6 | | |
| | AP-3160A (solid content) | 1.7 | 1.7 | | 5.7 | 5.7 |
| (F) component | Water derived from (E) component | 2.1 | 2.1 | 4.3 | 7.2 | 7.2 |
| | Ion-exchange water | 13.5 | 13.5 | 34.8 | 36.0 | 36.0 |
| Axial Tension regulator | UF20S | 1.0 | 1.0 | 1.9 | 0.3 | 0.3 |
| Rust preventive | AL4 | 0.1 | 0.1 | 0.4 | 0.2 | 0.2 |
| | W-16B | 0.1 | 0.1 | 1.1 | 2.8 | 2.8 |
| Total | | 43.5 | 46.1 | 73.6 | 129.7 | 129.7 |

Corresponding bolts coated with each one of the compositions were fabricated by the following processing method. Hereinafter, the bolts processed with the compositions are also called processed bolts.

### [Processing method]

The viscosity of each composition was adjusted to 100 mPa·s by adding pure water to the each composition under stirring by a stirrer with measuring a viscosity in a 25°C atmosphere by using a BL type viscometer and a No.2 rotor at 60 rpm. Then, bolts (hexagonal head bolts having bolt sizes: M10 (diameter) × 1.5 (pitch) × 20 mm (length)) having been subjected to galvanized chromate treatment were prepared. With the hexagonal portion of the bolt being pinched with fingers or fixed on a magnet for dip coating, the bolt was lowered into a processing liquid vertically to the liquid surface, whereby 80 to 90% of the screw portion was coated (dip coated) with the processing liquid. After several seconds, the bolt was slowly taken out from the liquid surface. With the screw tip being directed downward, the sealant adhered on the screw tip was wiped off with a waste cloth, and within 20 min, the resultant bolt was put in a hot air drier, and heated and dried at 80°C for 20 min with the screw tip contacting with nothing and the bolt being directed downward.

The processed bolts were subjected to a pressure test, and the results are collectively shown in Table 3. In Table 3, the processed bolts with the compositions of Examples 1 and 2 and Comparative Examples 1 to 3 are called Examples 1 and 2 and Comparative Examples 1 to 3, respectively.

### [Pressure test]

In order to check the airtightness (sealability) of the processed bolts, the processed bolts were subjected to a heat cycle test whose one cycle involved 2 hours in a 140°C atmosphere and 2 hours in a -40°C atmosphere; and the sealability was checked at the initial stage (0th cycle), the 10th cycle, the 20th cycle and the 30th cycle. In order to check the airtightness, aluminum-made jigs as shown in Fig. 1 were used. The five processed bolts were screwed into bolt inserting holes 1 of Fig. 1 at a tightening torque of 30 N·m, and a hose to feed a pressurized gas was installed to a gas enclosing hole 2. The jig was dipped in a vessel filled with water, and thereafter, a nitrogen gas as the pressurized gas was fed to the jig and the evaluation was made. The test was carried out at three steps of the pressure of the nitrogen gas of 0.5 MPa, 1.0 MPa and 1.5 MPa; each pressure was held for 2 min and the presence/absence of gas leakage was checked, and then, the pressure was raised. The pressure when leakage generating from places where the processed bolts were tightened was visually observed was checked; and among five processed bolts, the number of processed bolts exhibiting no gas leakage was counted to determine an "airtightness maintenance rate (%)". The distinct processed bolts were subjected to the heat cycle test of each of the initial stage (0th cycle), the 10th cycle, the 20th cycle and the 30th cycle, and the airtightness maintenance rate was checked.

**[Table 3]**

| Condition | Pressure (MPa) | Airtightness Maintenance Rate | | | | |
|---|---|---|---|---|---|---|
| | | Example 1 | Example 2 | Comparative Example 1 | Comparative Example 2 | Comparative Example 3 |
| Initial stage | 0.5 | 100 | 100 | 20 | 100 | 100 |
| | 1.0 | 100 | 100 | 20 | 100 | 100 |
| | 1.5 | 100 | 100 | 0 | 100 | 100 |
| 10th cycle | 0.5 | 100 | 100 | 100 | 100 | 100 |
| | 1.0 | 100 | 100 | 100 | 60 | 80 |
| | 1.5 | 100 | 100 | 100 | 20 | 20 |
| 20th cycle | 0.5 | 100 | 100 | 100 | 20 | 20 |
| | 1.0 | 100 | 100 | 100 | 0 | 0 |
| | 1.5 | 100 | 100 | 100 | 0 | 0 |
| 30th cycle | 0.5 | 100 | 100 | 100 | 80 | 80 |
| | 1.0 | 100 | 100 | 60 | 60 | 60 |
| | 1.5 | 100 | 100 | 0 | 0 | 0 |

Comparing Examples 1 and 2 with Comparative Examples 1 to 3, it is clear that the airtightness was retained from the initial stage to the 30th cycle and under three pressure conditions. In Comparative Examples 1 to 3, cases where the airtightness was retained until the 30th cycle and cases where not retained were both present, and it is inferred that the state of the cured substances changed over time.

According to Table 1 and Table 2, there were prepared testing compositions each composed only of an inclusion of component (A), an inclusion of a component (B), component (C) and component (D). The results are collectively shown in Table 4. As in Examples 1 and 2 and Comparative Examples 1 to 3 in Table 2, the testing compositions each composed only of an inclusion of component (A), an inclusion of component (B), component (C) and component (D) were called Examples 1 and 2 and Comparative Examples 1 to 3, respectively. On Examples 1 and 2 and Comparative Examples 1 to 3, the thermomechanical analysis (TMA) measurement was carried out. The results are collectively shown in Table 4.

### [Thermomechanical analysis (TMA) measurement]

The testing compositions indicated in Table 4 were prepared and thereafter left as they were in a 25°C atmosphere for 72 hours to be cured, whereby cylindrical cured substances of 5 mm in diameter were fabricated; and the cylindrical cured substances were cut into a length of 10 mm. By using a TMA/SS6000, manufactured by Seiko Instruments Inc., the measurement was carried out in the tensile mode in a temperature range of 25 to 200°C, at 5°C/min, at a frequency of 1 Hz and under a load of 9.81 mN to the cured substance. The linear expansion coefficient at temperatures lower than a temperature at which the linear expansion coefficient shifted is taken α1 (ppm/°C); and the linear expansion coefficient at temperatures higher than that, as α2 (ppm/°C). Further, the temperature of the intersection point of tangents of α1 and α2 is represented as a glass transition temperature "Tg (°C)". The linear expansion coefficient in the temperature range of 140 to 150°C in the linear expansion coefficient (α2) was taken as the "linear expansion coefficient (ppm/°C)". In order to retain the sealability, the linear expansion coefficient in the temperature range of 140 to 150°C was preferably 170 to 250 ppm/°C; and Tg was preferably 0 to 50°C.

**[Table 4]**

| Component | Raw Material | Example 1 | Example 2 | Comparative Example 1 | Comparative Example 2 | Comparative Example 3 |
|---|---|---|---|---|---|---|
| Inclusion of (A) component | jER806 | 9.0 | 9.0 | 3.0 | | |
| | jER604 | | | 9.0 | | |
| | E10P | 3.0 | 3.0 | | | |
| Inclusion of (A') component | 1G | | | | 17.5 | |
| | G-0150M | | | | 2.6 | |
| | BPE-80N | | | | 69.9 | 45 |
| | 1.6HX | | | | | 45 |
| Inclusion of (B) component | QX40 | 10.0 | 12.0 | 12.0 | | |
| Inclusion of (B') component | Nyper BW | | | | 3 | 3 |
| (C) component | K-54 | 0.6 | 0.7 | 0.7 | | |
| | K-61B | 0.7 | 0.9 | 0.9 | | |
| | p-tolyldiethanolamine | | | | 0.2 | 0.2 |
| (D) component | SNOW FLOSS | 1.7 | 2.0 | 2.0 | 6.0 | 6.0 |
| | SB-061R | | | | 7.7 | 7.7 |
| Total | | 25.1 | 27.7 | 27.7 | 106.9 | 106.9 |
| Tg | | 18 | 21 | 63 | 44 | 84 |
| Linear expansion coefficient | | 180 | 186 | 156 | 135 | 136 |

This application is based on Japanese Patent Application No. 2022-202917, filed on December 20, 2022, the entire disclosure of which is incorporated by reference in the present description.

### Reference Signs List

- 1: Bolt inserting hole
- 2: Gas enclosing hole

## Claims

1. A curable resin composition comprising the following components (A) to (D):
component (A): a capsule filled with a polyfunctional epoxy resin and a monofunctional epoxy resin as an inclusion;
component (B): a capsule filled with a polythiol as an inclusion;
component (C): a compound to promote curing of the inclusion of the component (A) with the inclusion of the component (B); and
component (D): an inorganic filler.

2. The curable resin composition according to claim 1, wherein a mass ratio of the polyfunctional epoxy resin and the monofunctional epoxy resin in the component (A) is from 99 : 1 to 25 : 75.

3. The curable resin composition according to claim 1, further comprising a (meth)acrylic polymer having tackiness as component (E).

4. The curable resin composition according to claim 3, wherein the (meth)acrylic polymer of the component (E) has a styrene skeleton.

5. The curable resin composition according to claim 3, further comprising water as component (F).

6. The curable resin composition according to claim 5, wherein the component (E) is an emulsion in the component (F); the component (A), the component (B) and the component (D) are dispersed in the component (F); and the component (C) is dissolved or dispersed in the component (E) or the component (F).

7. The curable resin composition according to claim 1, wherein a cured substance made by curing a composition of the inclusion of the component (A), the inclusion of the component (B), the component (C) and the component (D) in a 25°C atmosphere for 72 hours has a linear expansion coefficient in the temperature range of 140 to 150°C as measured by thermomechanical analysis (TMA) of 170 to 250 ppm/°C.

8. The curable resin composition according to claim 1, wherein a cured substance made by curing a composition of the inclusion of the component (A), the inclusion of the component (B), the component (C) and the component (D) in a 25°C atmosphere for 72 hours has a glass transition temperature as measured by thermomechanical analysis (TMA) of 0 to 50°C.

9. The curable resin composition according to claim 1, wherein a mass ratio of the inclusion of the component (A), the inclusion of the component (B), the component (C) and the component (D) is 100 : 50 to 100 : 5 to 20 : 10 to 30.

10. A screw member having a screw portion coated with a curable resin composition according to claim 1.
